# EUROPÄISCHE PATENTSCHRIFT

(11) **EP 1 740 870 B1**
(45) Veröffentlichungstag und Bekanntmachung des Hinweises auf die Patenterteilung: **25.06.2008**
(21) Anmeldenummer: 05738416.6
(22) Anmeldetag: 22.04.2005
(51) Int. Cl.: F16L 9/133, B32B 27/32

(54) **MEHRSCHICHTIGES ROHR**
MULTILAYERED PIPE
CONDUITE MULTICOUCHE

(30) Priorität: 28.04.2004 DE 202004006812 U
(43) Veröffentlichungstag der Anmeldung: 10.01.2007
(73) Patentinhaber: REHAU AG + Co, 95111 Rehau (DE)
(72) Erfinder: STADTHALTER, Peter, 96152 Burghaslach (DE); SCHIERJOTT, Uwe, 95194 Regnitzlosau (DE)
(86) Internationale Anmeldenummer: PCT/EP2005/004366
(87) Internationale Veröffentlichungsnummer: WO 2005/106307

(56) Entgegenhaltungen:
- EP-A- 1 046 849
- EP-A- 1 199 161
- US-A1- 2003 089 413

## Beschreibung

Die Erfindung betrifft Rohre gemäß dem Oberbegriff des Anspruches 1, aus zumindest zwei gemeinsam eine Rohrwand bildenden koaxialen Schichten aus thermoplastischen Polyolefinen gleicher Art, jedoch mit unterschiedlichen Eigenschaften, die untereinander untrennbar verbunden sind.

Bekannt sind bereits verschiedene mehrschichtige Rohre, die gegenüber einschichtigen Rohren Vorteile aufweisen.

Aus der EP 0 869 304 B1 sind mehrschichtige Rohre bekannt, die aus einem Grundrohr aus Polyethylen einem PE100 und einer Außenschicht aus vernetztem Polyethylen (PE-X) bestehen, sowie in einer weiteren Ausführungsform eine Diffusionssperrschicht gegenüber Schadstoffen aufweisen.
Diese Rohre sollen auf ökonomische Weise eine besondere Widerstandsfähigkeit gegen äußere mechanische Belastungen aufweisen. Die dünne und damit kostenreduzierte Außenschicht aus PE-X soll für erheblich verbessertes Abriebverhalten und höhere Punktlastbeständigkeiten sorgen, wodurch grabenlose Verlegetechniken und sandbettfreie Verlegungen mit der damit verbundenen Gefahr von Punktbelastungen ermöglicht werden sollen.
Bei einem bekannten gattungsgemäßen Rohr gemäß der DE 296 22 788 U1 besteht die Innenschicht aus einem Polyethylen hoher Dichte und die Außenschicht aus einem vernetzten Polyethylen. Durch die Vernetzung des Materials der Außenschicht soll die Kerbempfindlichkeit herabgesetzt werden, um auf diese Weise die Verschleißfestigkeit zu erhöhen und dadurch die Eignung für die grabenlose Verlegetechnik zu verbessern.
Solche Rohre sind zwar durch Verschweißen mittels Elektroschweißmuffen verbindbar, wenn auch die Schweißqualität nicht unbedenklich ist, jedoch ist ein Stumpfschweißen dieser Rohre nicht möglich.
Die DE 200 10 111 U1 beschreibt mehrschichtige Rohre mit insgesamt drei Schichten, bei denen das Grundrohr ebenfalls aus PE100 und sowohl die Innen- als auch die Außenschicht aus einem Polyethylen mit erhöhter Spannungsrißbeständigkeit bestehen - mit der gleichen Zielsetzung wie beim vorbeschriebenen Rohr.

Die Erfindung stellt sich die Aufgabe, ein gattungsgemäßes Rohr aufzuzeigen, das gegenüber dem Stand der Technik ein nochmals verbessertes mechanisches Verhalten, insbesondere ein erheblich verbessertes Abriebverhalten und höhere Punktlastbeständigkeiten aufweist, dabei den gleichen Herstellaufwand erfordert und zusätzlich die Möglichkeit der Sperrwirkung gegenüber Bodenschadstoffen aufweist.

Erfindungsgemäß wird dies durch ein Rohr mit den Merkmalen des Anspruchs 1 gelöst. Vorteilhafte Ausgestaltungen sind in den Unteransprüchen aufgeführt.

Es wird ein mehrschichtiges Rohr vorgeschlagen, mit einer Außenschicht aus einem Standard- Polyethylen wie z.B. PE 80 oder PE 100, welches einen FNCT- Wert eines einschichtigen Standarddruckrohres aufweist und an dessen innerem Umfang eine Innenschicht aus einem Polyethylen mit einem zumindest um etwa den Faktor 4 höheren FNCT- Wert angeordnet ist.
Als Ergebnis umfangreicher Untersuchungen wurde festgestellt, dass entgegen der Lehre der EP 0 869 304B1 bei äußeren Punktlasten die Materialeigenschaften der Innenschicht und nicht die der Außenschicht die Punktlastbeständigkeit bestimmen.
Es ist demnach überraschend nur notwendig und völlig ausreichend, dass das Material der Innenschichten der Rohre um zumindest etwa den Faktor 4 spannungsrißbeständiger ausgebildet ist, als die Außenschicht.
Da die Ergebnisse des sogenannten FNCT- Tests (Full Notch Creep Test) sehr gut mit der Spannungsrißbeständigkeit des Materiales korrelieren, ist das erfindungsgemäße mehrschichtige Rohr dadurch charakterisiert, dass der FNCT- Wert des Materials der Innenschicht einen zumindest um etwa den Faktor 4 höheren FNCT- Wert als der des Materials der Außenschicht des Rohres aufweist.

In einer weiteren vorteilhaften Ausführungsform weist bei dem erfindungsgemäßen Rohr die Außenschicht einen genormten Außendurchmesser und ein genormtes Verhältnis von Außendurchmesser zu Gesamtwanddicke (SDR) von etwa 10 bis 20 auf.

In einer weiteren vorteilhaften Ausführungsform weist das erfindungsgemäße Rohr eine Gesamtwanddicke der Innenschicht und der Außenschicht auf, die zumindest um etwa 1 % größer ist, als die Wanddicke eines Standardrohres nach EN 12201.
Das erfindungsgemäße Rohr weist weiterhin eine Wanddicke der Innenschicht auf die zumindest 5 %, vorzugsweise 10 % bis 20 % der Gesamtwanddicke des Rohres beträgt.

Als besonders vorteilhaft sind mit Hexen copolymerisierte Polyethylene mit bimodaler Molekulargewichtsverteilung, die erfindungsgemäßen Rohre sind somit bevorzugt mit Innenschichten aus diesen Materialien hergestellt.
Ebenso vorteilhaft für die Innenschichten der erfindungsgemäßen Rohre sind Polyethylene wie zum Beispiel Polyethylen- RT( raised temperature). Aufgrund deren amorpher bzw. kristalliner Strukturen sowie der Seitenketten werden die Bewegungen der PE- Makromoleküle gegeneinander behindert.

Da bereits vergleichsweise geringe Wanddicken der Innenschicht ausreichen, um damit ausgestattete mehrschichtige Rohre als sehr gut punktlastbeständig auszurüsten, hat ein solches erfindungsgemäßes Rohr hinsichtlich der Beständigkeit praktisch die Eigenschaften eines Rohres, welches vollständig aus einem vernetztem Polyethylen besteht; es kann somit wie diese Rohre für die gesamte Dauer der normgerechten Lebenserwartung einer Punktbelastung ausgesetzt werden, ohne zu versagen, kann also ebenso wie diese kostengünstig ohne Sandbettung verlegt werden.

Ein weiterer Vorteil dieser Ausführungsform besteht in der erhöhten Beständigkeit gegenüber langsamer Rißfortpflanzung nach Beschädigung der Außenschicht bei Lagerung, Transport oder bei - insbesondere grabenloser - Verlegung. Die Kombination von leicht erhöhter Wanddicke und einem Material der Innenschicht mit einem zumindest um etwa den Faktor 4 höheren FNCT- Wert, das gegenüber Rißfortpflanzung ganz besonders widerstandsfähig ist, erlaubt die Fertigung eines Rohres, dessen Empfindlichkeit gegenüber der Fortpflanzung von äußeren Kerben nur noch von den kostenintensivern Rohren, die vollständig aus vernetztem Polyethylen hergestellt sind, übertroffen wird.

Auch hinsichtlich schneller Rißfortpflanzung bietet das erfindungsgemäße Rohr erhöhten Widerstand gegenüber herkömmlichen einschichtigen und mehrschichtigen Rohren aus unvernetzten Polyethylenen, da bei dieser Versagensform der Bruch des Rohres ebenfalls von der Innenschicht ausgeht.

Bei den erfindungsgemäßen Rohren wurde dies erkannt und das Material der äußerst widerstandsfähigen Innenschicht weist einen zumindest etwa um den Faktor 4 höheren FNCT- Wert auf.

Die Ausbildung der Innenschicht ermöglicht es zudem, ein mehrschichtiges Rohr mit einer Außenschicht, deren Abmessungen einschlägigen Normen wie z.B. der EN 12201 entspricht, mit einer zusätzlichen Innenschicht auszustatten, ohne dass der Innendurchmesser dieses Rohres mehr als unwesentlich verringert ist.
Bei optimaler Prozessführung ist es möglich, mit der Gesamtwanddicke des Rohres weitgehend in der Normtoleranz zu bleiben, wenn die Dickenschwankungen der Außenschicht des Rohres nur wenig über dessen Nennmaß hinausgehen und die Dicke der Innenschicht in etwa der Normtoleranz, d.h. ca. 5 bis 15 % der Normwanddicke entspricht.

Neben diesen technischen Vorteilen hat diese erfindungsgemäße Ausführungsform noch ein weiteren Vorteil; die Zulassung von Druckrohren in verschiedensten Ländern ist trotz internationaler Harmonisierung und Normung immer noch zeit- und kostenaufwendig.
Dadurch, dass das erfindungsgemäße Rohr und die bevorzugten Ausführungsformen auf einem an sich genormten Rohr basieren, welches eine zusätzliche Innenschicht aufweist, entfallen diese Aufwendungen für die Zulassung von Druckrohren.

Gegenüber Vollwandrohren aus vernetztem Polyethylen (PE-X) bietet die erfindungsgemäße Ausführung mit nur einer Innenschicht neben dem Vorteil der weitaus kostengünstigeren Herstellung noch die Möglichkeit, diese erfindungsgemäßen Rohre mittels Stumpfschweißung zu verbinden.

Es liegt auch im Rahmen der Erfindung, dass die Innenschicht auf vorbeschriebene Weise so aufgebaut ist, dass sie Sperrwirkung gegenüber Kohlenwasserstoffen aufweist.

Bei allen erfindungsgemäßen Ausführungsformen kann es nötig sein, zwischen den vorgenannten Rohrschichten Haftvermittlerschichten einzubringen.
Auch eine zusätzliche optischen Gestaltung der Oberfläche, gehört zum Umfang der Erfindung, ebenso wie Rohre, die am äußeren Umfang Farbstreifen aufweisen.

Bei einer weiteren erfindungsgemäßen Ausgestaltung der Rohre ist die Innenschicht und / oder die Außenschicht antistatisch bzw. elektrisch leitfähig ausgerüstet.

Dies ist insbesondere bei Rohren, die für den Transport von Schüttgütern vorgesehen sind, vorteilhaft, um einen störungsfreien Transport zu ermöglichen. Dazu genügt in der Regel die antistatische Ausrüstung der Schichten des Rohres mit einem Oberflächenwiderstand von wenigstens 10 ⁻¹⁰ Ohm/cm.
Um den Aufbau elektrostatischer Felder, die z.B. Staubexplosionen auslösen können, zu verhindern, ist eine elektrisch leitfähige Einstellung der Schichten des Rohres mit einem Oberflächenwiderstand von wenigstens 10 ⁻⁶ Ohm/cm erforderlich.

In jedem Fall hat die Innenschicht des erfindungsgemäßen mehrschichtigen Rohres einen zumindest um etwa den Faktor 4 höheren FNCT- Wert als die Außenschicht, die den FNCT- Wert eines einschichtigen Standard-Druckrohres hat.
Hinsichtlich der Durchführung des Tests für die Ermittlung der FNCT- Werte wird auf den Aufsatz von S.H. Beech, S.J. Palmer und R.W. Burbidge mit dem Titel "Accelerated Laboratory Tests to Predict the Resistance to Slow Crack Growth of High Performance Polyethylene Pipe Resins" 1997, International Plastic Pipe Symposium Seite 205 ff verwiesen.

Weiterhin wird auf den Aufsatz von M. Fleissner verwiesen mit dem Titel "Experience With a Full Notch Creep Test in Determining the Stress Crack Performance of Polyethylenes" in Polymer Engineering and Science, Februar 1998, Vol. 38, Nr. 2.

Basierend auf den beschriebenen Testbedingungen beträgt bei 80°C, 4,0 MPa und bei Anwesenheit von 2% Netzmittel Arkopal der FNCT- Wert des Materials für die Außenschicht des Rohres aus Polyethylen PE100 gemäß EN 12201 mit einem Außendurchmesser von 110 + 0,6 mm sowie einer Wanddicke von 10,0 + 0,3 mm etwa 200 bis 500 h und der FNCT- Wert des Materials der Innenschicht aus einem Polyethylen mit einer Wanddicke von etwa 1,5 mm etwa 3.000 h.
In weiteren vorteilhaften Ausführungsform weist dieses mehrschichtige Rohr eine Innenschicht aus einem Polyethylen mit einer Wanddicke von etwa 0,7 mm auf, mit einem FNCT-Wert von etwa 6.000 h, bei 80°C, 4,0 MPa und bei Anwesenheit von 2% Netzmittel Arkopal.

Dieses erfindungsgemäße mehrschichtige Rohr erlaubt aufgrund seiner Beständigkeit gegenüber Punktlasten die Verlegung in Aushubmaterial ohne Sandbettung, ohne innerhalb der normgerechten Lebenserwartung aufgrund von Spannungsrissen zu versagen.

Zusätzlich weist dieses erfindungsgemäße mehrschichtige Rohr erhöhte Widerstandsfähigkeit gegenüber langsamer Rißausbreitung von an der Außenschicht entstandenen Riefen bzw. Kerben aus.
Bei einer Riefentiefe von etwa 2 mm werden damit bei einem Innendruck von 9 bar bei 80°C Standzeiten für dieses erfindungsgemäße mehrschichtige Rohr von mehr als 360 h erreicht.
Im Vergleich dazu versagt ein Vollwandrohr nach EN 12201 aus PE 100 bei diesem Test bereits nach 8 h und ein Dreischichtrohr nach der DE 200 10 111 U1 mit einem Außendurchmesser von 110,2 + 0,5 mm und einer Wanddicke von 10,1 + 0,4 mm nach 180 h.
Auch hinsichtlich schneller Rißausbreitung ist dieses Rohr entschieden widerstandsfähiger.

## Patentansprüche

1. Rohr aus zumindest zwei Schichten aus thermoplastischen Polyolefinen gleicher Art, jedoch mit unterschiedlichen Eigenschaften, die untereinander untrennbar verbunden sind, **dadurch gekennzeichnet, dass** das Material der Außenschicht etwa den FNCT-Wert (Full Notched Creep Test) eines einschichtigen Standarddruckrohres und das Material der Innenschicht einen zumindest etwa um den Faktor 4 höheren FNCT-Wert aufweist.

2. Rohr nach Anspruch 1, **dadurch gekennzeichnet, dass** die Außenschicht einen genormten Außendurchmesser und ein genormtes Verhältnis von Außendurchmesser zu Gesamtwanddicke (SDR) von etwa 10 bis 20 aufweist.

3. Rohr nach Anspruch 1 bis 2, **dadurch gekennzeichnet, dass** die Gesamtwanddicke der Innenschicht und der Außenschicht des Rohres zumindest 1 % größer ist, als die Wanddicke eines Standardrohres nach EN 12201.

4. Rohr nach Anspruch 1 bis 3, **dadurch gekennzeichnet, dass** die Wanddicke der Innenschicht zumindest 5 %, vorzugsweise 10 % bis 20 % der Gesamtwanddicke des Rohres beträgt.

5. Rohr nach Anspruch 1 bis 4, **dadurch gekennzeichnet, dass** das Material der Innenschicht aus mit Hexen copolymerisiertem Polyethylen Hoher Dichte (PEHD) mit bimodaler Molekulargewichtsverteilung besteht.

6. Rohr nach Anspruch 1 bis 5, **dadurch gekennzeichnet, dass** das Material der Innenschicht des Rohres eine Beimischung wenigstens eines antistatisch wirkenden Zuschlagsstoffes aufweist, wobei der Oberflächenwiderstand der Innenschicht wenigstens 10⁻¹⁰ Ohm/cm beträgt.

7. Rohr nach Anspruch 1 bis 6, **dadurch gekennzeichnet, dass** das Material der Innenschicht des Rohres eine Beimischung wenigstens eines elektrisch leitfähig eingestellten Zuschlagsstoffes aufweist, wobei der Oberflächenwiderstand der Innenschicht wenigstens 10⁻⁶ Ohm/cm beträgt.

8. Rohr nach Anspruch 1 bis 7, **dadurch gekennzeichnet, dass** das Material der Außenschicht des Rohres eine Beimischung wenigstens eines farbgebenden Zuschlagsstoffes aufweist.

9. Rohr nach Anspruch 1 bis 8, **dadurch gekennzeichnet, dass** das Material der Außenschicht des Rohres eine Beimischung wenigstens eines die UV-Beständigkeit erhöhenden Zuschlagsstoffes aufweist.

10. Rohr nach Anspruch 1 bis 9, **dadurch gekennzeichnet, dass** die Schichten des Rohres aus Polypropylen bestehen.

## Claims

1. Pipe composed of at least two layers composed of thermoplastic polyolefins of identical type, but with different properties, which have been bonded inseparably to one another, **characterized in that** the material of the outer layer corresponds approximately to the FNCT (full notched creep test) value of a single-layer standard pressure pipe and the FNCT value of the material of the inner layer is higher by at least approximately a factor of 4.

2. Pipe according to Claim 1, **characterized in that** the outer layer has a standardized outer diameter and a standardized ratio of outer diameter to total wall thickness (SDR) of about 10 to 20.

3. Pipe according to Claim 1 or 2, **characterized in that** the total wall thickness of the inner layer and of the outer layer of the pipe is at least 1% greater than the wall thickness of a standard pipe to EN 12201.

4. Pipe according to any of Claims 1 to 3, **characterized in that** the wall thickness of the inner layer is at least 5%, preferably from 10% to 20%, of the total wall thickness of the pipe.

5. Pipe according to any of Claims 1 to 4, **characterized in that** the material of the inner layer is composed of hexene-copolymerized high-density polyethylene (HDPE) with bimodal molecular weight distribution.

6. Pipe according to any of Claims 1 to 5, **characterized in that** the material of the inner layer of the pipe has an admixture of at least one antistatic additive, where the surface resistance of the inner layer is at least 10⁻¹⁰ ohm/cm.

7. Pipe according to any of Claims 1 to 6, **characterized in that** the material of the inner layer of the pipe has an admixture of at least one electrically conductive additive, where the surface resistance of the inner layer is at least 10⁻⁶ ohm/cm.

8. Pipe according to any of Claims 1 to 7, **characterized in that** the material of the outer layer of the pipe has an admixture of at least one colourant additive.

9. Pipe according to any of Claims 1 to 8, **characterized in that** the material of the outer layer of the pipe has an admixture of at least one additive increasing the UV resistance.

10. Pipe according to any of Claims 1 to 9, **characterized in that** the layers of the pipe are composed of polypropylene.

## Revendications

1. Tube fait d'au moins deux couches en polyoléfines thermoplastiques de même nature, avec, toutefois, des propriétés différentes, qui sont reliées l'une à l'autre d'une manière inséparable, **caractérisé en ce que** le matériau de la couche externe présente environ la valeur FNCT (Full Notched Creep Test) d'un tube de pression standard à une couche et **en ce que** le matériau de la couche interne présente une valeur FNCT plus élevée au moins environ d'un facteur de 4.

2. Tube selon la revendication 1, **caractérisé en ce que** la couche externe présente un diamètre externe normé et un rapport normé du diamètre externe à l'épaisseur de paroi entière (SDR) d'environ 10 à 20.

3. Tube selon la revendication 1 à 2, **caractérisé en ce que** l'épaisseur de paroi entière de la couche interne et de la couche externe du tube est d'au moins 1 % supérieure à l'épaisseur de paroi d'un tube standard conformément à la norme EN 12201.

4. Tube selon la revendication 1 à 3, **caractérisé en ce que** l'épaisseur de paroi de la couche interne représente au moins 5 %, de préférence de 10 % à 20 % de l'épaisseur de paroi entière du tube.

5. Tube selon la revendication 1 à 4, **caractérisé en ce que** le matériau de la couche interne se compose de polyéthylène de densité élevée (PEHD), copolymérisé à l'hexène, ayant une répartition de poids moléculaire bimodale.

6. Tube selon la revendication 1 à 5, **caractérisé en ce que** le matériau de la couche interne du tube présente un mélange d'au moins un additif agissant de manière antistatique, la résistance superficielle de la couche interne étant d'au moins 10 ⁻¹⁰ Ohm/cm.

7. Tube selon la revendication 1 à 6, **caractérisé en ce que** le matériau de la couche interne du tube présente un mélange d'au moins un additif ajusté de manière électroconductrice, la résistance superficielle de la couche interne étant d'au moins 10 ⁻⁶ Ohm/cm.

8. Tube selon la revendication 1 à 7, **caractérisé en ce que** le matériau de la couche externe présente un mélange d'au moins un additif chromophore.

9. Tube selon la revendication 1 à 8, **caractérisé en ce que** le matériau de la couche externe présente un mélange d'au moins un additif augmentant la résistance aux rayons UV.

10. Tube selon la revendication 1 à 9, **caractérisé en ce que** les couches du tube se composent de polypropylène.
